# EUROPÄISCHE PATENTANMELDUNG

(11) **EP 2 345 851 A2**
(43) Veröffentlichungstag der Anmeldung: **20.07.2011**
(21) Anmeldenummer: 10450179.6
(22) Anmeldetag: 18.11.2010
(51) Int. Cl.: F24D 17/00

(54) **Einrichtung zur Warmwasserbereitung**

(30) Priorität: 18.11.2009 AT 18272009; 02.03.2010 AT 3272010
(71) Anmelder: Schütz, Peter, Dr. Dipl.-Ing., 1140 Wien (AT)
(72) Erfinder: Schütz, Peter, Dr. Dipl.-Ing., 1140 Wien (AT)
(74) Vertreter: Gibler & Poth Patentanwälte OG

(57) **Zusammenfassung**

Bei einer Einrichtung (1) zur Warmwasserbereitung für Haushalte od. dgl. mit einem Wärmetauscher (2), wobei der Wärmetauscher (2) einen ersten Eingang (21) für ein erstes Fluid, einen ersten Ausgang (22) für das erste Fluid und einen zweiten Eingang (23) für ein zweites Fluid und einen zweiten Ausgang (24) für das zweite Fluid aufweist, wird vorgeschlagen, dass der erste Eingang (21) mit einer Grauwasserleitung (31), der erste Ausgang (22) mit einer Abwasserleitung (32) und der zweite Eingang (23) mit einer Frischwasserleitung (41) verbunden sind.

## Beschreibung

Die Erfindung betrifft eine Einrichtung zur Warmwasserbereitung für Haushalte gemäß dem Oberbegriff des Patentanspruches 1.

Durch Verbesserung der Bauphysik, Verwendung von Lüftungsanlagen und Weiterentwicklungen am Heizsystem, konnte der Heizenergiebedarf für Gebäude in den letzten Jahren wesentlich gesenkt werden. Passivhäuser sind Stand der Technik und benötigen im Vergleich zur Bauweise vor 30 Jahren nur mehr etwa ein Zehntel des Jahresenergiebedarfes für die Heizung.

Beim Warmwasserverbrauch und beim Energiebedarf für die Warmwassererzeugung hat es im Unterschied dazu in den letzten Jahrzehnten keine wesentliche Verbesserung gegeben; der Energieverbrauch für die Warmwasserbereitung ist im Prinzip noch genauso hoch wie vor 30 Jahren, bzw. höher, da die Komfortansprüche, also der Warmwasserverbrauch gestiegen sind.

Beispielsweise benötigen Passivhäuser typischer Weise über das Jahr betrachtet doppelt so viel Energie zur Warmwasserbereitung wie für die Heizung. Selbst wenn man davon ausgeht, dass die Wärme im Sommer über Solaranlagen gewonnen werden kann, somit etwa die Hälfte der Energieerzeugung für Warmwasser ohne Nutzung von Primärenergie erfolgen kann, so muss im Winter immer noch ungefähr gleich viel Primärenergie für die Warmwasserbereitung wie für das Heizen aufgewandt werden.

Aufgabe der Erfindung ist es daher eine Einrichtung der eingangs genannten Art anzugeben, mit welcher die genannten Nachteile vermieden werden können, mit welcher die Nutzung von Primärenergie reduziert werden kann, ein hoher Wirkungsgrad erzielt werden kann, welche Einrichtung einfach aufgebaut ist, eine hohe Lebensdauer aufweist und wartungsarm ist.

Erfindungsgemäß wird dies durch die Merkmale des Patentanspruches 1 erreicht. Dadurch kann die im häuslichen Grauwasser enthaltene Wärmeenergie einfach und mit einem hohen Wirkungsgrad genutzt werden, bevor das häusliche Grauwasser als Abwasser in die Kanalisation abgeleitet wird oder für andere Zwecke, beispielsweise zur WC-Spülung verwendet wird.

Besonders günstig ist es, wenn die Einrichtung bei Verbrauchern eingesetzt werden, bei denen ein Durchlauf des Wassers gegeben ist, beispielsweise beim Duschen, bei denen also während des Bedarfs einer Zufuhr an warmen Wasser gleichzeitig häusliches Grauwasser abgeführt wird. Bei Hausanlagen kann dies auch für die Summe der an die Grauwasserleitung angeschlossenen Verbraucher gegeben sein. Den Verbrauchern wird Brauchwarmwasser zugeführt, welches nachfolgend als häusliches Grauwasser abgezogen wird.

Vorteilhaft bei der erfindungsgemäßen Einrichtung ist, dass sie ohne Wärmepumpen oder anderen komplexen und wartungsintensiven Vorrichtungen auskommen, wobei bei häuslichem Grauwasser in derartigen Vorrichtungen aufgrund der Verschmutzungen im häuslichen Grauwasser sehr schnell Ablagerungen entstehen, welche den Wirkungsgrad und die Funktionsfähigkeit der Einrichtung erheblich beeinträchtigen.

Die Unteransprüche, welche ebenso wie der Patentanspruch 1 gleichzeitig einen Teil der Beschreibung bilden, betreffen weitere vorteilhafte Ausgestaltungen der Erfindung.

Bei einem Gegenstromwärmetauscher kann ein besonders hoher Wirkungsgrad erzielt werden, insbesondere bei ungefähr gleichen Masseströmen im Wärmetauscher.

Mit einer Verzweigungseinheit kann das durch den Wärmetauscher geführte Frischwasser auf die Heißwasserleitung und auf die Kaltwasserleitung aufgeteilt werden. Bei einem annähernd konstanten Verbrauch kann dadurch sichergestellt werden, dass die Massenströme im Wärmetauscher etwa gleich groß sind.

Durch die Möglichkeit einen Umwälzkreislauf zu bilden, der die von häuslichem Grauwasser durchflossenen Leitungen des Wärmetauschers umfasst, kann durch ein Umwälzen von Fluid in dem Umwälzkreislauf eine Reinigung des Wärmetauschers erreicht werden.

Dabei kann vorgesehen sein, dass das Fluid, welches im Umwälzkreislauf im Kreis geführt wird, zumindest eine vorgebbare Konzentration an Reinigungsmittel umfasst.

Durch ein Aufheizen des Wärmetauschers kann einfach eine Hygienisierung der von Frischwasser durchflossenen Leitung des Wärmetauschers sichergestellt werden, wodurch ein hoher Hygienestandard sichergestellt werden kann.

Das Aufheizen kann insbesondere mittels Durchleiten von Heißwasser oder einer eigenen Heizvorrichtung des Wärmetauschers erfolgen. Die Heizvorrichtung kann beispielsweise mit Heißwasser betrieben werden oder als elektrische Heizung ausgebildet sein.

Mit einer eingestauten Bauweise in Bezug auf die Grauwasserleitung und die Abwasserleitung kann einfach sichergestellt werden, dass stets Fluid in den vom häuslichen Grauwasser durchflossenen Leitungen des Wärmetauschers ist und auf diese Weise die Gefahr eines Anbackens von Anlagerungen in diesen Leitungen erheblich gesenkt werden kann.

Die Erfindung betrifft weiteres eine Dusche, bei der eine oben angeführte Einrichtung zur Warmwasserbereitung integriert ist.

Dies stellt eine besonderes einfache und effiziente Möglichkeit dar, die Erfindung bereitzustellen. Dabei können einfach bestehende Duschen nachgerüstet werden bzw. neue Duschen mit einer Einrichtung als Bausatz oder als Komplettpaket angeboten werden.

Die Erfindung betrifft weiters ein Verfahren nach dem Patentanspruch 10.

Das Verfahren betrifft eine effiziente Nutzung der oben angeführten Einrichtung zur Warmwasserbereitung.

Durch das Vorsehen eines wiederkehrenden Reinigungsschrittes kann der Bereich des Wärmetauschers, der mit häuslichen Grauwasser in Kontakt kommt, einfach, schnell und effizient von Verunreinigungen befreit werden, wodurch eine lange Lebensdauer und ein gleichbleibender Wirkungsgrad sichergestellt werden kann. Wird ein Hygienisierungsschritt in vorgebbaren Abständen durchgeführt, so kann auf einfache Weise sichergestellt werden, dass die Einrichtung hohen Hygienestandards entspricht.

Die Wirkung des Reinigungsschrittes kann erhöht werden, indem gleichzeitig der Hygienisierungsschritt durchgeführt wird, wobei durch die Erwärmung des Wärmetauschers eine bessere Reinigung erzielt wird.

Ist der Bereich des Wärmetauschers, der mit häuslichen Grauwasser in Kontakt kommt, ständig mit Fluid gefüllt, so kann ein Anbacken von Ablagerungen vermieden werden, wodurch die Ablagerungen in einem Reinigungsschritt einfach entfernt werden können.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigen:
Fig. 1 bis 15 schematische Fließbilder verschiedener Ausführungsformen der erfindungsgemäßen Einrichtung zur Warmwasserbereitung;
Fig. 16 schematisch die Anordnung von Filtern in der Grauwasserleitung;
Fig. 17 bis 20 eine schematische Darstellung einer Ausführungsform des Aufbaus des Wärmetauschers; und
Fig. 21 einen Aufbau des Abflusses mit einer Vertiefung einer Badewanne.

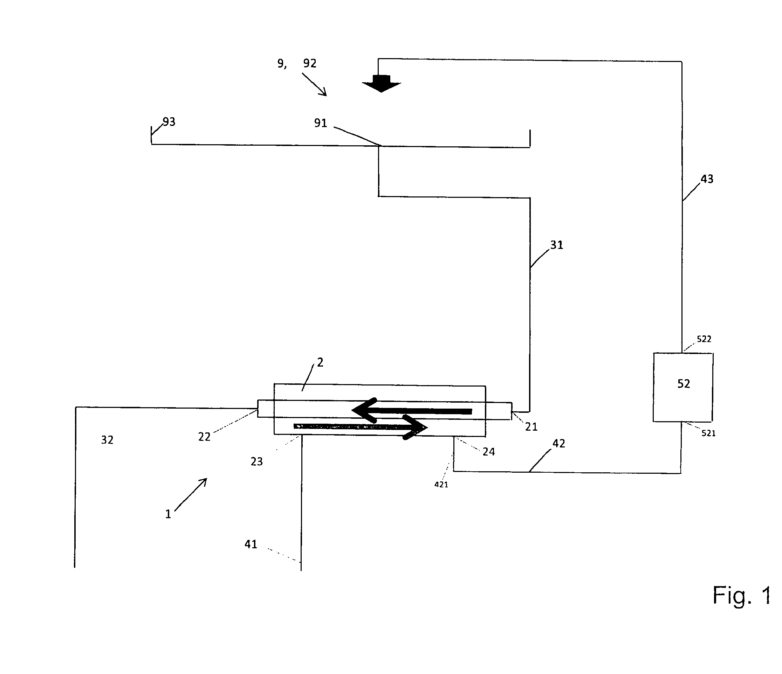

Die Fig. 1 bis 13 zeigen eine Einrichtung 1 zur Warmwasserbereitung für Haushalte od. dgl. mit einem Wärmetauscher 2, wobei der Wärmetauscher 2 einen ersten Eingang 21 für ein erstes Fluid, einen ersten Ausgang 22 für das erste Fluid und einen zweiten Eingang 23 für ein zweites Fluid und einen zweiten Ausgang 24 für das zweite Fluid aufweist. Dabei sind der erste Eingang 21 mit einer Grauwasserleitung 31, der erste Ausgang 22 mit einer Abwasserleitung 32 und der zweite Eingang 23 mit einer Frischwasserleitung 41 verbunden.

Grauwasser im Sinne der Erfindung ist fäkalienfreies Wasser, welches durch Gebrauch verändert ist und anschließend von einem Abfluss aufgenommen wird, und jedes über diesen Abfluss gelangende Wasser.

Häusliches Grauwasser im Sinne der Erfindung ist Grauwasser aus Waschküchen, Badezimmern und ähnlichen Räumen. Häusliches Grauwasser ist demnach Wasser, welches durch Hautpartikel, Haare, Seife oder andere in Haushalten vorhandene Flüssigkeiten leicht verschmutzt ist. Dieses kommt insbesondere in Haushalten, Hotels, Schulen, Duschräumen vor, wobei diese Aufzählung nicht abschließend ist. Bei dem häuslichen Grauwasser tritt das Problem auf, dass durch die Verschmutzung Ablagerungen im Wärmetauscher 2 entstehen und die Gefahr besteht, dass die Einrichtung zuwächst und an Wirkungsgrad verliert oder gar gänzlich verstopft. Diese Ablagerungen können insbesondere durch Verseifung, Haare oder dergleichen hervorgerufen werden.

Dies tritt insbesondere bei Einrichtungen auf, bei denen das häusliche Grauwasser durch eine Vielzahl an komplexen und für Ablagerungen anfälligen Leitungselementen fließen muss, weshalb derartige Einrichtungen einen hohen Wartungsbedarf aufweisen.

Die erfindungsgemäße Einrichtung 1 weist eine einfache Konstruktion auf, wobei die einzelnen Elemente so ausgebildet werden können, dass eine lediglich geringe Gefahr von Ablagerungen gegeben ist.

Der Begriff Fluid wird als Oberbegriff für die einzelnen Wasserarten verwendet, wobei teilweise den einzelnen Leitungen 31, 32, 33, 41 42, 43, 44, 45, 46 unterschiedliche Wasserarten zugewiesen werden, um eine bessere Unterscheidbarkeit zu erreichen. Beispielsweise wird das häusliche Grauwasser nach dem Verlassen des Wärmetauschers als Abwasser bezeichnet. Für einen Fachmann ist ersichtlich, dass auch das Abwasser als häusliches Grauwasser bezeichnet werden könnte, da im Wesentlichen lediglich die Temperatur verändert wird und sich dadurch die Eigenschaft des häuslichen Grauwassers als häusliches Grauwasser nicht ändert.

In der Frischwasserleitung 41 wird dem System frisches Wasser zugeführt, welches beispielsweise aus einem öffentlichen Leitungsnetz, einem Brunnen, einer Kläranlage od. dgl. kommen kann.

Als vorteilhaft erscheint, wenn der Wärmetauscher 2 als Gegenstromwärmetauscher ausgebildet ist. Dadurch kann das erste Fluid annähernd bis auf die Eintrittstemperatur des zweiten Fluids abgekühlt werden, wodurch fast die gesamte nutzbare Wärmeenergie des häuslichen Grauwassers dem häuslichen Grauwasser entzogen werden kann und ein hoher Wirkungsgrad gegeben ist. Es hat sich gezeigt, dass der Wärmetauscher 2 einfach hinreichend lang ausgebildet werden kann, um einen hohen Wirkungsgrad sicherzustellen. Im Vergleich zu anderen Wärmetauschern, welche zumindest bereichsweise einen höheren Temperaturunterschied zwischen dem ersten Fluid und dem zweiten Fluid aufweisen und daher ein schnellerer Wärmeübergang gegeben ist, hat sich gezeigt, dass ein Gegenstromwärmetauscher einen höheren Gesamtwirkungsgrad aufweist. Eine besonders einfache Ausgestaltung des Wärmetauschers 2 ergibt sich, wenn er ein Rohr-in Rohr Wärmetauscher ist.

Weitere vorteilhafte Ausgestaltungen des Wärmetauschers 2 sind ein Plattenwärmtauscher oder ein Streifenwärmetauscher, welche einfach und kompakt aufgebaut sein können.

Bei einem Rohr-in Rohr Wärmetauscher kann das innere Rohr als Wellrohr ausgeführt sein, bei dem der Mantel entlang der Längsrichtung des Rohres gewellt ist. Dadurch kann auf einfache Weise erreicht werden, dass sowohl die Strömung des ersten Fluids als auch die Strömung des zweiten Fluids im Bereich des Wärmeübergangs vom ersten Fluid auf das zweite Fluid turbulenter im Vergleich zu einem glatten und geraden Rohr ist, wodurch ein besserer Wärmeübergang sichergestellt werden kann. Dabei wird allerdings der Strömungswiderstand erhöht. Weiters wird durch das Wellrohr die Oberfläche des Rohres vergrößert.

Durch die konkrete Ausgestaltung des Wellrohres können Wärmeübergang und Strömungswiderstand eingestellt werden.

In besonderer Ausgestaltung kann die Wellung dieses Rohres schraubenförmig, spiralig ausgeführt, wobei nicht nur die Oberfläche und Turbulenz vergrößert werden, sondern die Strömung auch noch einen Drall erhält, wodurch die Durchmischung im jeweiligen Fluid verbessert wird.

Günstig ist es, wenn das erste Fluid im Wärmetauscher 2 von dem zweiten Fluid umgeben ist, wodurch Wärmeverluste nach Außen möglichst gering gehalten werden können.

Weiters erscheint es vorteilhaft, wenn der Wärmetauscher 2 mit einer geringen Baugröße ausgebildet werden kann, wodurch sowohl ein nachträglicher Einbau als auch die Bereitstellung der Einrichtung 1 zusammen mit einem einzelnen Verbraucher 9, beispielsweise einer Dusche 92 ermöglicht wird. Dies kann erreicht werden, wenn der Wärmetauscher 2 mit flexiblen Rohren ausgebildet ist, wobei der gesamte Wärmetauscher 2 als Rohrwickel ausgebildet sein kann.

Es kann vorgesehen sein, dass das innere Rohr im Wärmetauscher 2 als Wellrohr und das äußere Rohr als flexibler Schlauch ausgebildet ist. Dabei kann das Wellrohr aus einem Metall mit einer guten Wärmeleitfähigkeit und der flexible Schlauch aus einem Material mit einer geringen Wärmeleitfähigkeit sein.

Das Wellrohr kann insbesondere aus Kupfer sein. Dadurch kann das Wachstum von Legionellen und anderen für das Trinkwasser schädliche Keime gehemmt werden. Insbesondere erscheint es vorteilhaft, wenn die Oberflächen, die mit dem zweiten Fluid, welches Trinkwasserqualität hat, in Berührung stehen, aus Kupfer gefertigt sind, oder mit Kupfer beschichtet sind und der Wärmetauscher 2 aus diesem Material besteht.

Der Wärmetauscher 2 kann im Bereich des ersten Eingangs 21 ein Wärmeisolierungsmittel aufweisen und die Frischwasserleitung 41 und/oder der Wärmetauscher 2 können im Bereich des zweiten Eingangs 23 frei von dem Wärmeisolierungsmittel ausgebildet sein. Durch das Wärmeisolierungsmittel kann die Abgabe von Wärme an die Umgebung gesenkt werden, wodurch der Wirkungsgrad gesteigert werden kann. Weist das Frischwasser üblicherweise eine Temperatur auf, welche geringer als die Umgebungstemperatur im Bereich des zweiten Eingangs 23 ist, so hat es sich als vorteilhaft erwiesen, diesen Bereich frei von dem Wärmeisolierungsmittel auszugestalten, wodurch ein Wärmeübergang von der Umgebung auf das Frischwasser erfolgen kann und ein besonders hoher Wirkungsgrad der Einrichtung 1 erreicht werden kann.

Dabei kann vorgesehen sein, dass 50 % bis 90 %, vorzugsweise 55 % bis 80 %, insbesondere 60 % bis 75 %, der Länge des Wärmetauschers 2 ein Wärmeisolierungsmittel aufweist. In Abhängigkeit von den jeweiligen Gegebenheiten kann auf diese Weise sichergestellt werden, dass ein verstärkter Wärmeübergang zwischen der Umgebung und dem Frischwasser lediglich so lange erfolgt, so lange die Temperatur des Frischwassers geringer als die der Umgebung ist.

In Fig. 1 ist eine Ausgestaltung einer Einrichtung 1 gezeigt, die einen Wärmetauscher 2 umfasst und bei der der zweite Ausgang 24 des Wärmetauschers 2 mit einem Eingang 521 eines Warmwassererzeugers 52 verbunden ist. Bei dieser Ausgestaltung wird das gesamte aus dem zweiten Ausgang 24 des Wärmetauschers ausströmende Fluid dem Warmwassererzeuger 52 zugefügt.

Im Betrieb wird über die Grauwasserleitung 31 häusliches Grauwasser in den ersten Eingang 21 und Frischwasser über die Frischwasserleitung 41 in den zweiten Eingang 23 geleitet.

Ist der Wärmetauscher 2 als Gegenstromwärmetauscher ausgebildet, so werden das erste Fluid und das zweite Fluid im Wärmetauscher 2 im Gegenstrom geführt.

Der Warmwassererzeuger 52 kann ein Durchlauferhitzer oder ein Speichersystem sein.

Wird häusliches Grauwasser bereitgestellt während warmes Fluid von Verbrauchern benötigt wird, hat sich gezeigt, dass ein Durchlauferhitzer günstig ist, da dann die dem häuslichen Grauwasser entzogene Wärme unmittelbar dem Verbraucher 9 zugeführt werden kann. Gegebenenfalls kann ein kleines Speichersystem vorgesehen sein, um die Zeit bis zur Bereitstellung von warmen Fluid an den Verbraucher 9 möglichst kurz halten zu können.

Wird in der Grauwasserleitung 31 häusliches Grauwasser zu anderen Zeiten bereitgestellt als warmes Fluid von den Verbrauchern 9 benötigt wird, so kann ein Speichersystem vorteilhaft sein, in dem das mittels des häuslichen Grauwassers erwärmte Frischwasser gespeichert werden kann. Dabei kann der Speicher dem Warmwassererzeuger 52 vorgeschaltet oder nachgeschaltet sein. Bei anderen Ausführungsformen kann auch vorgesehen sein, dass der Warmwassererzeuger 52 unmittelbar das Fluid in dem Speichersystem erwärmt. Ein Speichersystem kann insbesondere dann zweckmäßig sein, wenn die Zeitabstände zwischen der Bereitstellung von häuslichem Grauwasser und dem erneuten Abruf von warmen Fluid gering sind, sodass lediglich ein geringer Teil der von dem häuslichen Grauwasser aufgenommen Wärme an die Umgebung abgegeben wird und ein hinreichender Anteil im warmen Fluid verbleibt.

Es kann vorgesehen sein, dass das Fluid in dem Warmwassererzeuger 52 auf etwa 60° C erwärmt wird, wodurch eine Hygienisierung erfolgt und Legionellen oder andere Krankheitserreger abgetötet werden.

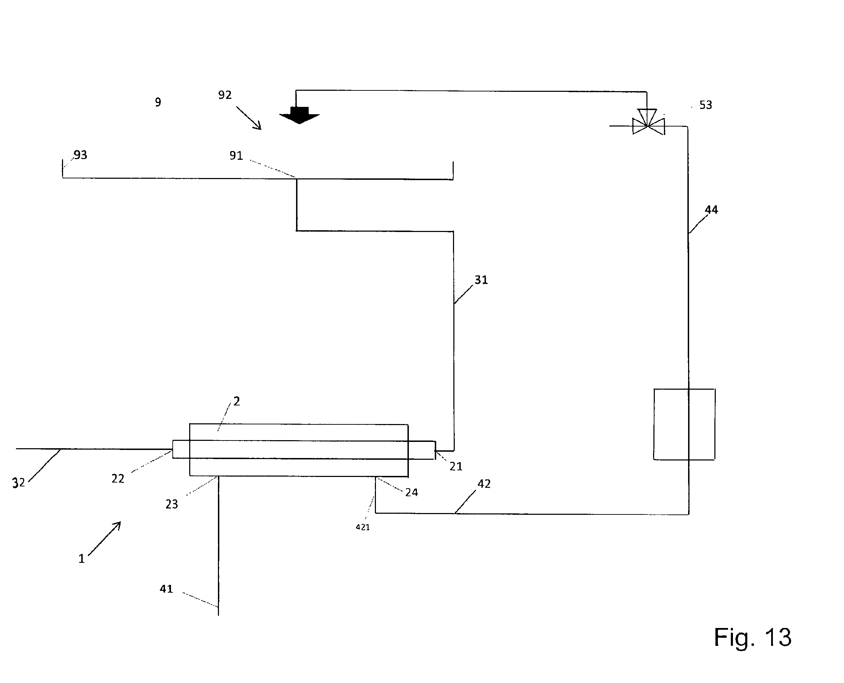

Bei der Ausgestaltung gemäß Fig. 13 ist vorgesehen, dass das gesamte aus dem zweiten Ausgang 24 des Wärmetauschers 2 ausströmende Fluid in eine Kaltwasserleitung eingespeist wird.

Auch bei dieser Ausgestaltung kann gegebenenfalls ein Speichersystem vorgesehen sein. Diese Ausgestaltung kann insbesondere bei einem unregelmäßigen Anfall von häuslichem Grauwasser und dem Bedarf von warmen Fluid durch die Verbraucher 9 zweckmäßig sein.

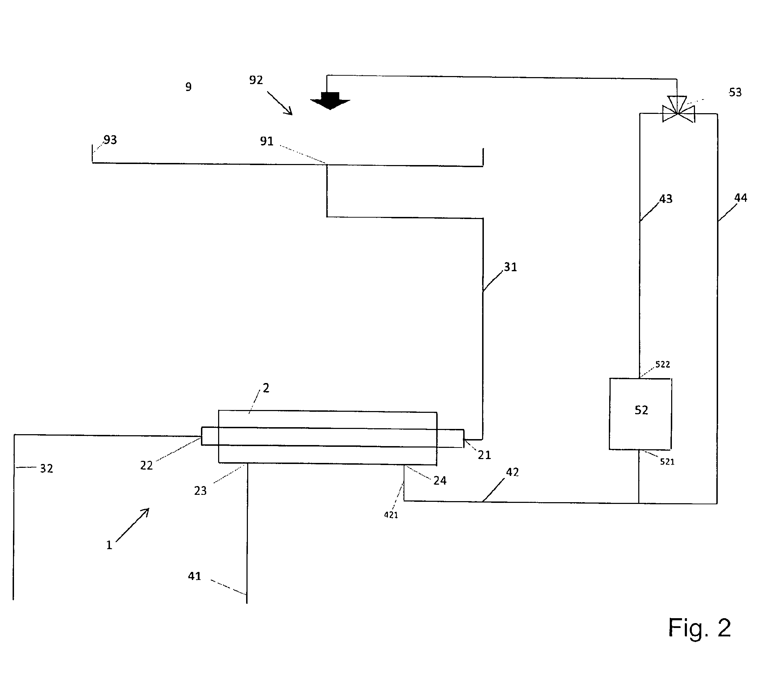

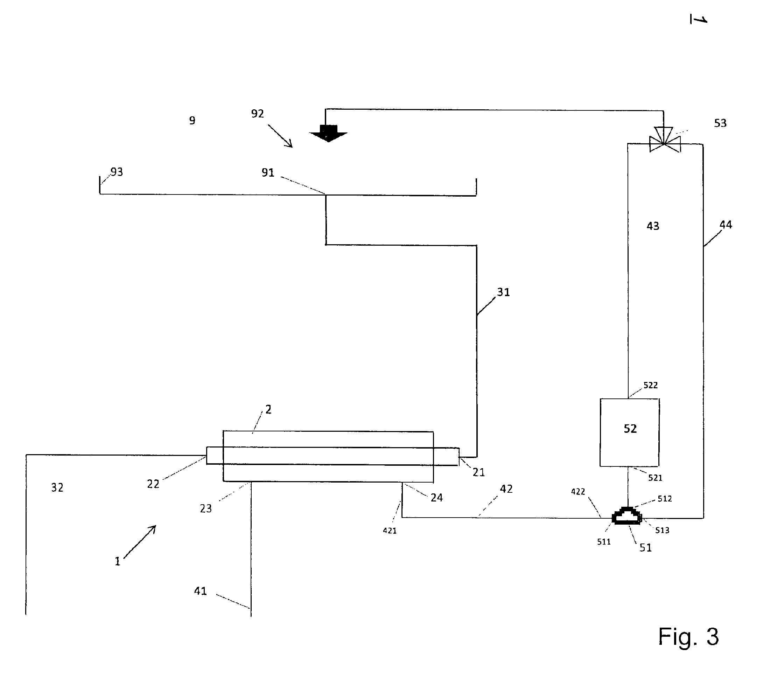

In Fig. 2 ist gezeigt, dass in zumindest einer Mischungseinheit 53 des Verbrauchers 9 die Heißwasserleitung 43 und die Kaltwasserleitung 44 einmünden können, wodurch einem Verbraucher einfach Fluid mit einer Temperatur zwischen der Temperatur des Fluids in der Heißwasserleitung 43 und der Temperatur des Fluids in der Kaltwasserleitung 44 bereitgestellt werden kann. Dabei kann das aus dem Wärmetauscher 2 austretende, erwärmte Fluid wahlweise über die Heißwasserleitung 43, die Kaltwasserleitung 44 oder sowohl über die Heißwasserleitung 43 und die Kaltwasserleitung 44 zu dem Verbraucher 9 gelangen. Bei der Ausführungsform gemäß Fig. 3 ist der zweite Ausgang 24 mit einem ersten Ende 421 einer Verbindungsleitung 42 verbunden, und das zweite Ende 422 der Verbindungsleitung 42 ist mit dem Eingang 511 einer Verzweigungseinheit 51 verbunden, wobei ein erster Ausgang 512 der Verzweigungseinheit 51 mit dem Eingang 521 eines Warmwassererzeugers 52 verbunden ist, wobei ein Ausgang 522 des Warmwassererzeuger 52 mit einer Heißwasserleitung 43 verbunden ist, und ein zweiter Ausgang 513 der Verzweigungseinheit 51 mit einer Kaltwasserleitung 44 verbunden ist.

Bei Duschen 92 oder ähnlichen Verbrauchern 9 entspricht die Menge des häuslichen Grauwassers im Wesentlichen dem Bedarf an warmen Fluid. Durch die Verzweigungseinheit 51 können sowohl die Heißwasserleitung 43 als auch die Kaltwasserleitung 44 mit dem aus dem zweiten Ausgang 24 des Wärmetauschers 2 austretenden Fluid beschickt werden, sodass die Masse des ersten Fluids im Wesentlichen der Masse des zweiten Fluids entspricht. Durch diese ausgeglichene Massenbilanz kann ein besonders hoher Wirkungsgrad erreicht werden.

Weiters kann auf einfache Weise vorgesehen werden, dass das Fluid in der Heißwasserleitung stets in etwa die gleiche Temperatur aufweist. Dadurch kann der Warmwassererzeuger 52 das Fluid stets auf eine vorgebbare Endtemperatur erwärmen.

Sofern die Bereitstellung von häuslichem Grauwasser und der Verbrauch von warmen Fluid durch den Verbraucher 9 gleichzeitig auftreten, kann sich ein Kreislauf mit einem hohen Wirkungsgrad über einen langen Zeitraum mit dem Bedarf einer lediglich geringen Energiezufuhr aufrecht erhalten.

Gegebenenfalls kann durch Speichersysteme eine Zeitverschiebung zwischen dem Abruf von Fluid durch den Verbraucher und der Bereitstellung von häuslichem Grauwasser ausgeglichen werden. Dabei kann vorgesehen sein, dass Fluid aus dem Speicher entnommen wird und dieser Speicher wieder befüllt wird, sobald häusliches Grauwasser bereitgestellt wird. Um ein gänzliches Entleeren des Speichers zu vermeiden kann zusätzlich vorgesehen sein, dass Fluid aus der Frischwasserleitung nachgeliefert wird, sobald ein vorgebbarer unterer Füllstand des Speichers gegeben ist.

Eine einfache Bauweise kann erreicht werden, wenn der Speicher von der Verbindungsleitung 42 umfasst ist.

Das aus dem zweiten Ausgang 24 austretende Fluid wird in der Verzweigungseinheit 51 in zwei Teilströme geteilt, wobei der erste Teilstrom mit dem Warmwassererzeuger 52 auf eine vorgebbare Heißtemperatur gebracht und anschließend in eine Heißwasserleitung 43 eingespeist wird, und wobei der zweite Teilstrom in die Kaltwasserleitung 44 eingespeist wird.

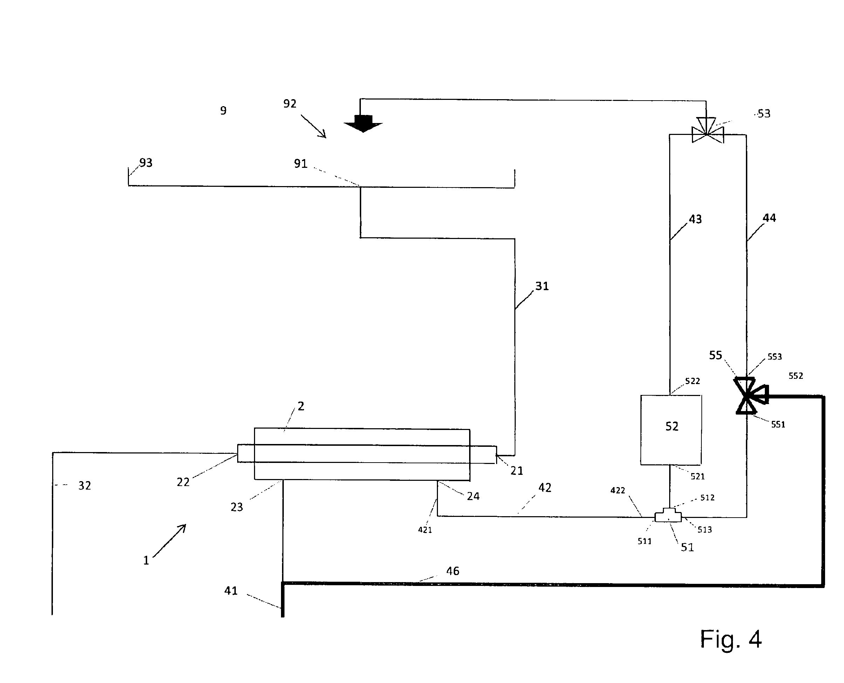

Wie in Fig. 4 gezeigt ist, kann in der Kaltwasserleitung 44 eine Temperaturbegrenzungsvorrichtung 55 angeordnet sein, wobei eine Frischwasser-Bypassleitung 46 die Frischwasserleitung 41 unmittelbar mit einem zweiten Eingang 552 der Temperaturbegrenzungsvorrichtung 55 verbindet. Die Kaltwasserleitung 44 mündet in einen ersten Eingang 551 der Temperaturbegrenzungsvorrichtung 55 und wird anschließend an den Ausgang 553 der Temperaturbegrenzungsvorrichtung 55 weitergeführt.

Mit der Temperaturbegrenzungsvorrichtung 55 kann sichergestellt werden, dass der Verbraucher aus der Kaltwasserleitung Fluid beziehen kann, welches eine vorgebbare Temperatur nicht übersteigt. Auf diese Weise kann einfach ein Verbrühungsschutz ausgebildet werden. Dies kann insbesondere dann erforderlich sein, wenn der Wärmetauscher 2 eine hohe Temperatur aufweist.

Weiters kann auf diese Weise ermöglicht werden, die dem Verbraucher 9 zugeführte Temperatur bei Bedarf schnell zu verringern. Beispielsweise kann dies bei einer Kaltdusche nach einer Heißdusche wünschenswert sein.

Dabei wird in der Kaltwasserleitung 41 mittels der Temperaturbegrenzungsvorrichtung 55 Frischwasser zugemischt, sobald die Temperatur des Fluids in der Kaltwasserleitung 44 einen vorgebbaren Wert übersteigt.

Die Heißwasserleitung 43 und die Kaltwasserleitung 44 können mit zumindest der Mischungseinheit 53 des Verbrauchers 9 verbunden sein, wodurch einem Verbraucher einfach Fluid mit einer Temperatur zwischen der Temperatur des Fluids in der Heißwasserleitung 43 und der Temperatur des Fluids in der Kaltwasserleitung 44 bereitgestellt werden kann.

Durch die Anordnung, dass an der Mischungseinheit 53 an den Eingängen lediglich Fluid verwendet wird, das durch den Wärmetauscher 2 geflossen ist, kann gewährleistet werden, dass die Massenströme des ersten Fluids und des zweiten Fluids im Wesentlichen gleich groß sind. Dadurch kann ein besonders hoher Wirkungsgrad erzielt werden.

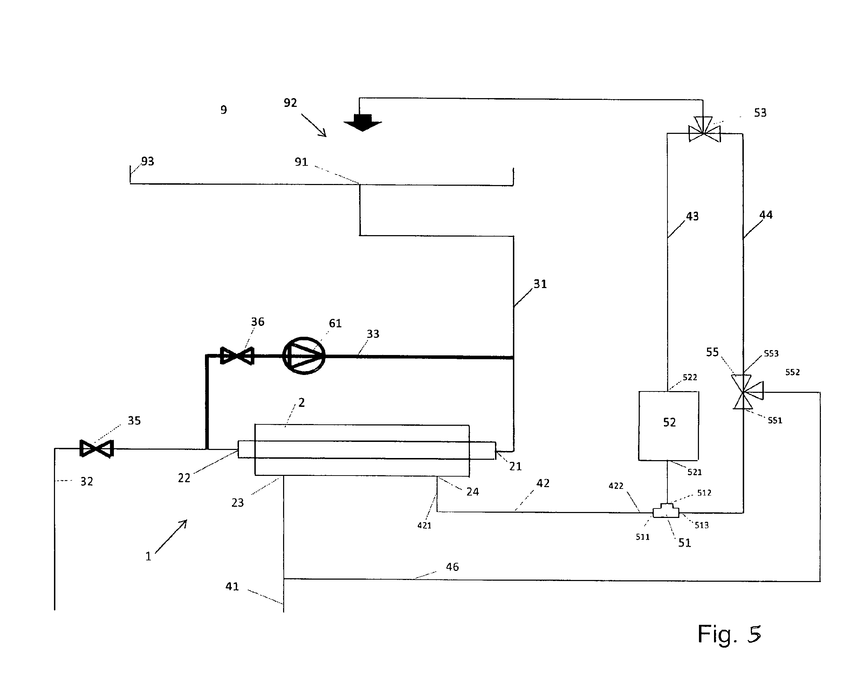

Bei der Ausführungsform gemäß Fig. 5 ist die Grauwasserleitung 31 und die Abwasserleitung 32 weiters mittels einer Reinigungsleitung 33 verbunden, wobei ein Fluid mittels einer Umwälzpumpe 61 durch die Reinigungsleitung 33 und der Leitung des Wärmetauschers 2 für das erste Fluid im Kreis führbar ist.

In einem Reinigungsschritt wird durch die Leitung des Wärmetauschers 2 für das erste Fluid und die Reinigungsleitung 33 ein Umwälzkreislauf gebildet, und ein Fluid mittels der Umwälzpumpe 61 im Umwälzkreislauf im Kreis geführt.

Es kann vorgesehen sein, dass das Fluid im Umwälzkreislauf im Wärmetauscher 2 vom ersten Eingang 21 zum ersten Ausgang 22 geführt wird. Alternativ kann auch vorgesehen sein, dass Fluid im Umwälzkreislauf in der Gegenrichtung, also im Wärmetauscher 2 vom ersten Ausgang 22 zum ersten Eingang 21 geführt wird. Es kann weiters vorgesehen sein, dass die die Fließrichtung des Fluids im Reinigungsschritt zumindest einmal umgekehrt wird.

Um sicherzustellen, dass das Fluid im Reinigungsschritt nicht über die Abwasserleitung 32 entweicht, kann in der Abwasserleitung 32 ein Abwasserventil 35 vorgesehen sein, wodurch eine Absperrung der Abwasserleitung 32 auf einfache Weise erreicht werden kann.

Weiters kann in der Reinigungsleitung 33 ein Umwälzventil 36 angeordnet sein, wodurch sichergestellt werden kann, dass lediglich im Reinigungsschritt Fluid durch die Reinigungsleitung 33 strömt.

Dabei ist es vorteilhaft, wenn dem im Umwälzkreislauf geführten Fluid ein Reinigungsmittel hinzugefügt wird, wodurch die Effizienz des Reinigungsschrittes erhöht werden kann und die erforderliche Dauer des Reinigungsschrittes gering gehalten werden kann.

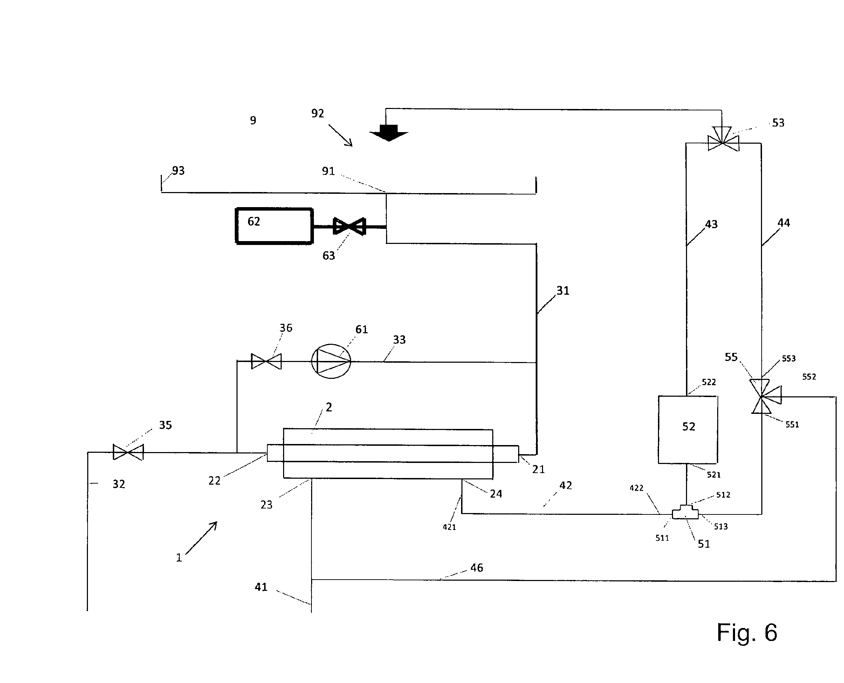

Bei der Ausführungsform gemäß Fig. 6 ist ein Dosierbehälter 62 vorgesehen, mit dem eine automatische Eindosierung eines Reinigungsmittels vor dem Reinigungsschritt erfolgen kann. Der Dosierbehälter 62 kann mittels eines Dosierventils 63 mit der Grauwasserleitung 31 verbunden sein.

Bei anderen Ausführungsformen kann der Dosierbehälter 62 auch mit der Reinigungsleitung 33 oder einem anderen Teil des Umwälzkreislaufes verbunden sein.

Es kann auch vorgesehen sein, dass das Reinigungsmittel manuell über den Abfluss des Verbrauchers 9 zugeführt wird.

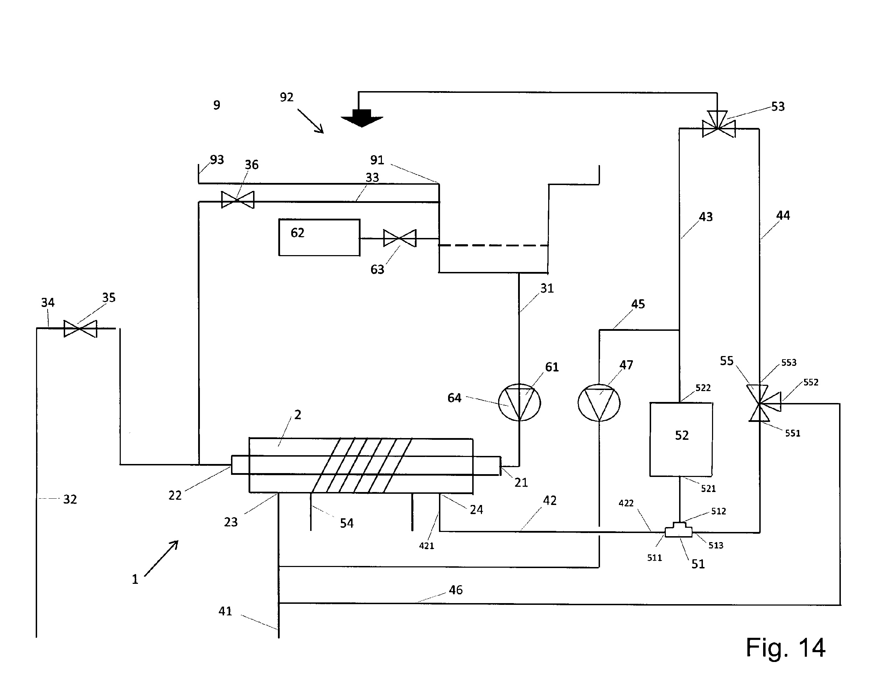

Bei der Ausführungsform gemäß Fig. 14 ist im Bereich des Abflusses des Verbrauchers 9 eine Vertiefung ausgeführt, wobei sich die Vertiefung lediglich über einen Teilbereich der Grundfläche des Verbrauchers 9 erstreckt. Der Teilbereich kann kleiner als 15%, vorzugsweise kleiner als 10%, insbesondere kleiner als 7%, die Grundfläche des Verbrauchers 9 sein. Dabei bildet die Vertiefung den tiefsten Punkt des Verbrauchers 9. Mit dem unteren Bereich der Vertiefung ist die Grauwasserleitung 31 verbunden.

Die Vertiefung kann die Form eines Topfes aufweisen.

In der Vertiefung kann ein Sieb als Grobfilter 65 zum Auffangen von Haaren und Schmutz angeordnet sein, wodurch auf einfache Weise eine Grobreinigung des Grauwassers erfolgen kann.

In die Vertiefung kann die Umwälzleitung 33 einmünden, wodurch Wasser beim Reinigungsschritt durch die Vertiefung geleitet wird. Dadurch kann sichergestellt werden, dass für den Reinigungsschritt Reinigungsmittel manuell in die Vertiefung eingebracht werden kann und zuverlässig erfasst wird. Weiters kann gewährleistet werden, dass keine Rückstände des Reinigungsmittels im Abfluss verbleiben.

Die Umwälzleitung 33 kann vorzugsweise im oberen Drittel der Vertiefung einmünden. Dies sichert eine gute Durchspülung der Vertiefung im Reinigungsschritt.

Weiters kann in der Vertiefung ein Sensor vorgesehen sein, mit dem ein Ansteigen des Wasserspiegels in der Vertiefung detektiert werden kann und gegebenenfalls eine Ansteuerung der Durchlaufpumpe 64 bewirken kann.

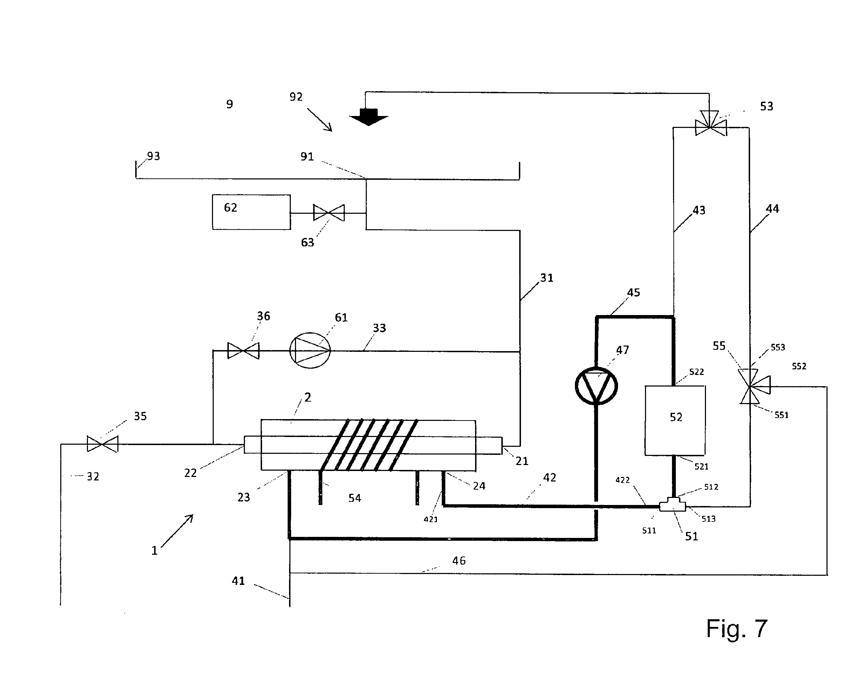

Bei der Ausführungsform gemäß Fig. 7 sind die Heißwasserleitung 43 und die Frischwasserleitung 41 weiters mittels einer Hygienisierungsleitung 45 verbunden, wobei Fluid von der Heißwasserleitung 43 über die Hygienisierungsleitung 45 durch die Leitung des Wärmetauschers 2 für das zweite Fluid führbar ist.

Dabei kann der Wärmetauscher in einem Hygienisierungsschritt erhitzt werden, sodass Keime wirksam abgetötet werden. Auf diese Weise kann ein hoher Hygienestandard sichergestellt werden.

In dem Hygienisierungsschritt wird Fluid von der Heißwasserleitung 43 über die Hygienisierungsleitung 45 zur Frischwasserleitung 41 und durch die Leitung des Wärmetauschers 2 für das zweite Fluid geführt, wodurch der Wärmetauscher 2 erwärmt wird.

Weites ist in Fig. 7 eine Aufheizvorrichtung 54 zum Beheizen des Wärmetauschers 2 gezeigt. Auch mit der Aufheizvorrichtung 54 kann der Wärmetauscher 2 während des Hygienisierungsschrittes beheizt werden.

Es kann vorgesehen sein, dass die Hygienisierung lediglich mit der Hygienisierungsleitung 45, lediglich mit der Aufheizvorrichtung 54 oder aber durch ein Zusammenwirken der Hygienisierungsleitung 45 und der Aufheizvorrichtung 54 erfolgt. Wird eine Vorrichtung nicht benötigt, so kann sie weggelassen werden.

Als besonders günstig hat sich gezeigt, wenn der Reinigungsschritt und der Hygienisierungsschritt zumindest teilweise gleichzeitig durchgeführt werden.

In der Hygienisierungsleitung 45 kann eine Hygienisierungspumpe 47 vorgesehen sein, wodurch ein vorgebbarer Durchsatz im Hygienisierungsschritt sichergestellt werden kann.

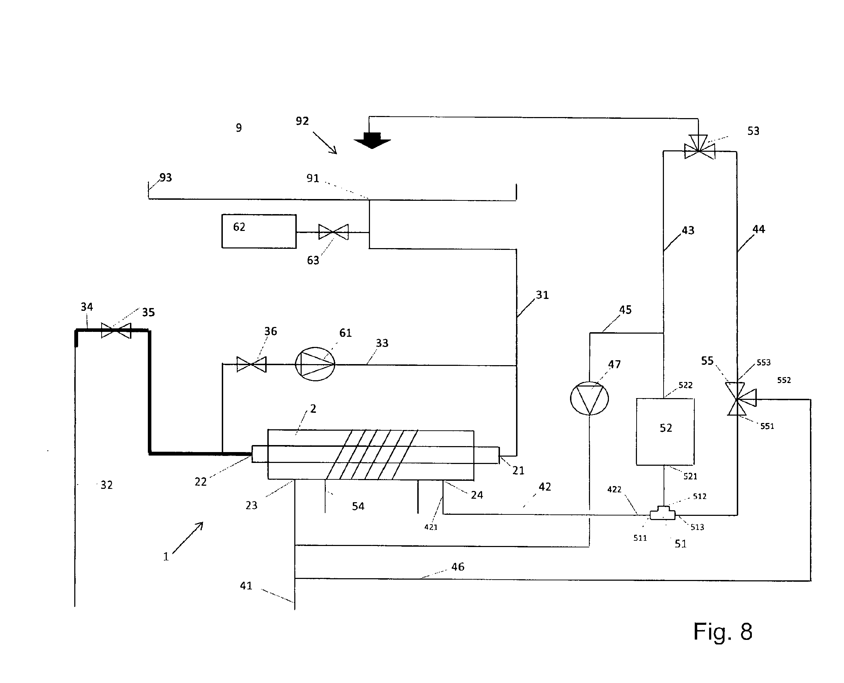

Bei der Ausführungsform in Fig. 8 ist schematisch gezeigt, dass der Wärmetauscher 2 in Bezug auf die Grauwasserleitung 31 und die Abwasserleitung 32 in eingestauter Bauweise angeordnet ist.

Dabei kann der Wärmetauscher 2 zwischen dem ersten Eingang 21 und dem ersten Ausgang 22 stets mit Fluid gefüllt gehalten werden.

Es hat sich als vorteilhaft gezeigt, wenn der Wärmetauscher 2 in Bezug auf das erste Fluid eingestaut betrieben wird. Unter Einstauen wird hier verstanden, dass der Wärmetauscher 2 in Bezug auf das erste Fluid nicht selbstständig leer rinnen kann. Dies kann durch das Hochziehen eines Bereiches der Abwasserleitung 32 erreicht werden, wodurch die Grauwasserleitung 31, der Wärmetauscher 2 und die Abwasserleitung 32 einen Siphon in der Form eines U-Rohres bilden.

Der höchste Punkt der Abwasserleitung 32 bildet einen Überlauf 34. Das Abwasser kann dann nicht mehr frei aus dem Wärmetauscher 2 abfließen.

Das Einstauen hat zur Folge, dass bei Ausbleiben von weiterem häuslichen Grauwasser das erste Fluid in dem Wärmetauscher 2 verbleibt, wodurch eine weitere Wärmeübertragung auf das zweite Fluid möglich ist. Weiters können allfällige Anlagerungen nicht austrocknen und daher nicht anbacken. Im Wärmetauscher 2 kann eine wechselnde Korrosionsbeanspruchung durch Fluid und Luft vermieden werden, wodurch einen lange Lebensdauer der Einrichtung 1 erreicht werden kann. Weiters verhindert der eingestaute Wärmetauscher 2, dass Gerüche von der Abwasserleitung 32 über die Grauwasserleitung 31 zu einem Verbraucher 9 gelangen können.

Die treibende Kraft des häuslichen Grauwasserdurchflusses durch den Wärmetauscher 2 ist das natürliche Gefälle, also der Höhenunterschied zwischen dem Abfluss des Verbrauchers 9 und dem Überlauf 34.

Das Einstauen kann zu einem kleinen natürlichen Gefälle führen, wodurch es zu einem Rückstau des häuslichen Grauwassers kommen kann. Dies kann insbesondere bei einem hohen Strömungswiderstand des Wärmetauschers 2 gegeben sein.

Um einen hinreichenden Durchsatz des ersten Fluids zu erreichen, kann zur Unterstützung eine Pumpe 61, 64 vorgesehen sein.

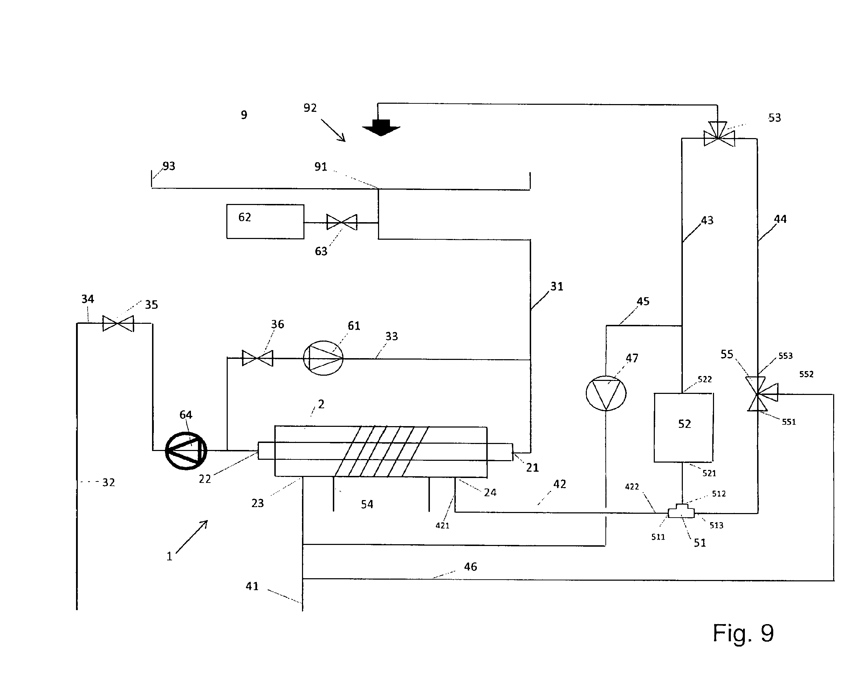

Bei der Ausführungsform gemäß Fig. 9 ist in der Abwasserleitung 32 eine Durchsatzpumpe 64 vorgesehen. Dabei wird die Durchsatzpumpe 64 im Normalbetrieb, also bei der Wärmerückgewinnung aus dem häuslichen Grauwasser, durchflossen.

Es kann auch vorgesehen sein, dass die Umwälzpumpe 61 zur Erhöhung des Durchflusses des ersten Fluids während der Wärmeübertragung genutzt wird.

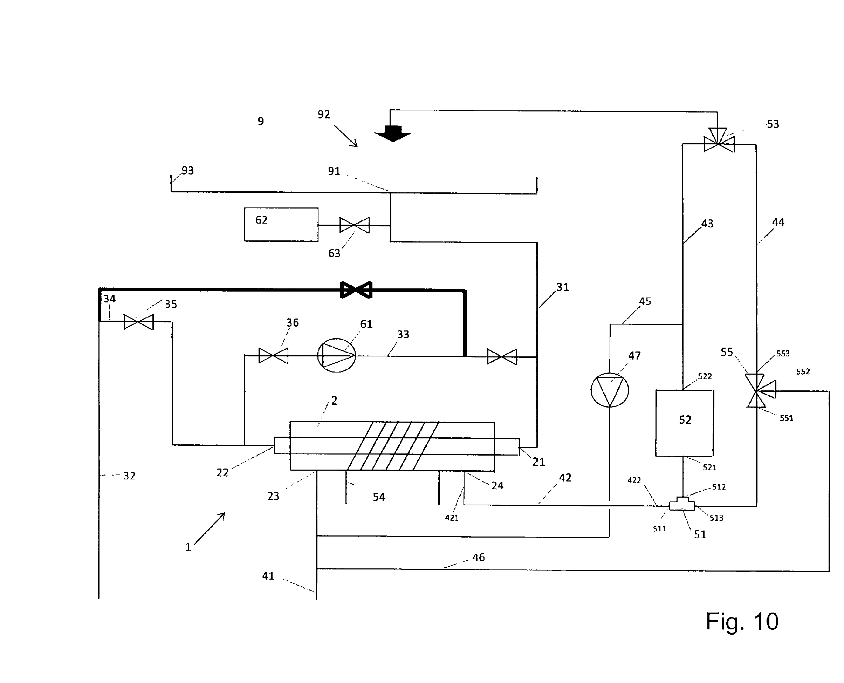

Bei der Ausführungsform gemäß Fig. 10 kann Fluid nach der Umwälzpumpe 61 von der Reinigungsleitung in die Abwasserleitung gepumpt werden. Dabei kann die Umwälzpumpe 61 mittels einer Detektionsvorrichtung lediglich im Bedarfsfall eingeschaltet werden, insbesondere wenn ein vorgebbarer Rückstau in der Grauwasserleitung 31 gegeben ist.

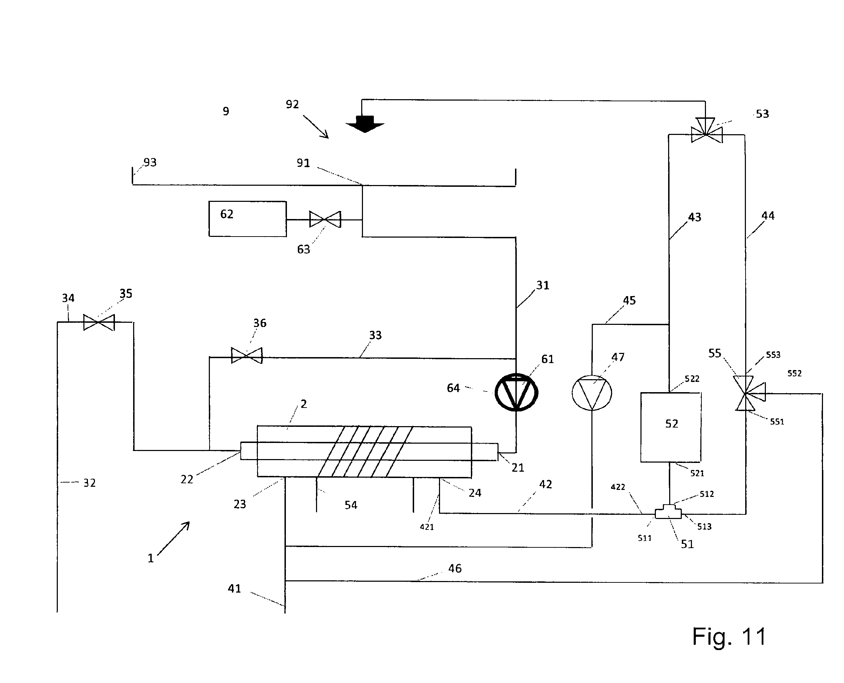

In Fig. 11 ist eine Ausführungsform gezeigt, bei der die Umwälzpumpe 61 in der Grauwasserleitung 31 angeordnet ist, wobei die Umwälzpumpe stets den Durchfluss des ersten Fluids unterstützen kann.

Die Umwälzpumpe 61 und die Durchsatzpumpe 64 können als Wasserstrahlpumpe ausgebildet sein. Eine andere bevorzugte Ausführungsform betrifft eine Pumpen-Turbine, wobei die Turbine insbesondere mittels des Fluids in der Frischwasserleitung 41 oder der Verbindungsleitung 42 angetrieben werden kann. Die Pumpen 61, 64 können mit einem Sensor in der Frischwasserleitung 41 wirkverbunden sein, wobei die Pumpen 61, 64 permanent laufen, wenn Frischwasser 41 durch die Frischwasserleitung 41 strömt.

Bei den Ausführungsformen gemäß Fig. 1 bis 11 und 13 ist die Einrichtung 1 einem einzelnen Verbraucher 9 zugeordnet.

Dabei kann der Verbraucher eine Dusche 92 mit einer Duschtasse 93 sein, wobei im Sockel der Duschtasse 93 eine Einrichtung 1 zur Warmwasserbereitung angeordnet ist.

Der Wärmetauscher 2 kann im Bereich des zweiten Eingangs 23 am Unterbau der Dusche aufliegen.

Es kann vorgesehen sein, dass zwischen dem Unterbau und dem Wärmetauscher 2 ein wärmeleitfähiges Verbindungsmittel angeordnet ist, wobei das Verbindungsmittel an der dem Unterbau zugewandten Seite gegengleich zu dem Unterbau und an der dem Wärmetauscher 2 zugewandten Seite gegengleich zu dem Wärmetauscher 2 ausgebildet ist.

Um einen größeren Platz für die Einrichtung 1 zu schaffen, kann vorgesehen sein, dass unterhalb der Dusche eine Aussparung in der Trittschalldämmung und/oder im Estrich vorgesehen ist.

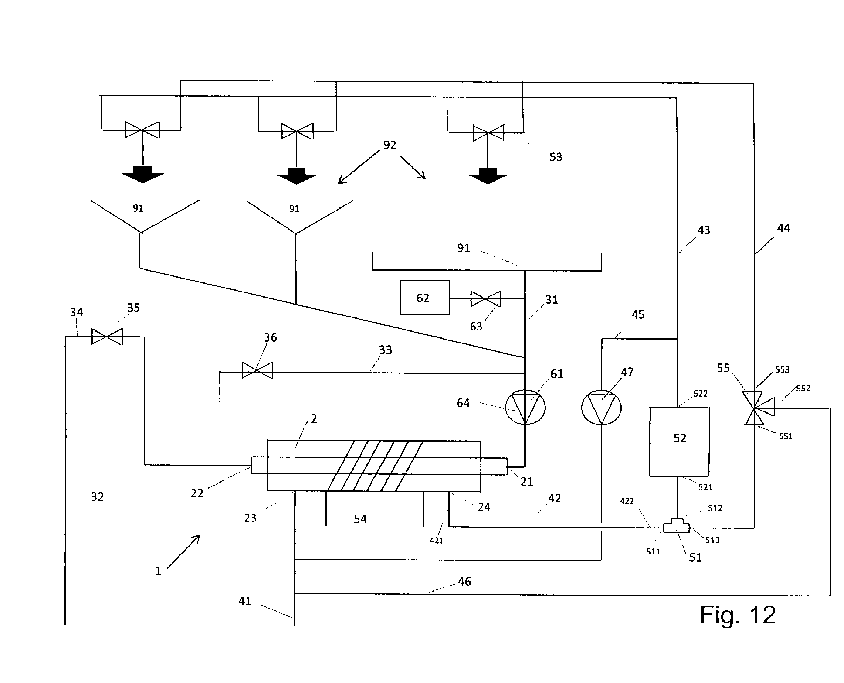

In Fig. 12 ist eine Einrichtung 1 dargestellt, bei der die Grauwasserleitung 31 mit den Abflüssen 91 mehrerer Verbraucher 9 verbunden ist.

Dabei wird in der Grauwasserleitung 31 das häusliche Grauwasser mehrerer Verbraucher 9 zusammengeführt.

Mit der Einrichtung 1 zur Warmwasserbereitung kann ein hoher Wirkungsgrad erzielt werden, wobei die Anfälligkeit zu Verschmutzungen gering ist, wodurch im Betrieb ein annähernd konstanter Wirkungsgrad erreicht werden kann. Die Wartung kann einfach und automatisiert erfolgen, sodass längere Ausfälle der Einrichtung 1 aufgrund von aufwändigen Instandsetzungsarbeiten vermieden werden können. Aufgrund des einfachen Aufbaus kann die Einrichtung 1 mit einer kleinen Baugröße ausgebildet werden, wodurch ein einfaches Nachrüsten und Ausrüsten auch einzelner Verbraucher 9 möglich ist. Mit den beschriebenen Hygienemaßnahmen kann ein hoher Hygienestandard gesichert werden, wodurch das Erfüllen von Hygienenormen gesichert werden kann.

Mit dem Verfahren zur Warmwasserbereitung kann ein Gesamtsystem aus Wärmerückgewinnung und Warmwasserbereitung mit integriertem Reinigungs- und Hygienisierungsverfahren bereitgestellt werden, das einen sehr hohen Wirkungsgrad aufweist und bei dem Verschmutzungen oder Legionellen weitgehend vermieden bzw. auf einfache Weise beseitigbar sind. Es eignet sich sowohl für den zentralen Einsatz, beispielsweise für ein ganzes Gebäude, oder zur dezentraten Verwendung, beispielsweise für einen Feuchtraum, oder für einzelne Verbraucher 9, beispielsweise eine Dusche 92.

Der Wärmetauscher 2 kann spiralförmig gewickelt sein und die Form einer Spirale aufweisen. Eine solche Form des Wärmetauschers 2 kann auch Wirbel, Strudel oder Vortex bezeichnet werden.

Dabei kann der Wärmetauscher 2 bereichsweise in einer Ebene angeordnete Wicklungen umfassen, wobei mehrere solcher Ebene lagenweise übereinander geschlichtet sein können. Diese Lagen können untereinander gestürzt eingebaut sein, wodurch sich eine besonders platzsparende Bauweise ergibt. Es kann vorgesehen sein, dass das Fluid in einer Lage von innen nach außen und in der benachbarten Lage von außen nach innen fließt.

Dabei kann vorgesehen sein, dass der Wärmetauscher 2 mehrere zusammengeschlossene Einzellagen umfasst, wodurch einfach eine modulare Bauweise des Wärmetauschers 2 erreicht werden kann. Dadurch kann die Einrichtung einfach für verschiedene Zwecke und vorgegebene Einbaumaße angepasst werden.

Mit einer Spiralengeometrie kann erreicht werden, dass das zu zweite Fluid im gesamten Wärmetauscher 2 rechtsdrehend geleitet wird. Dadurch kann erreicht werden, dass das zweite Fluid beim Austritt aus dem Wärmetauscher 2 aktiviert ist, wodurch eine Verbesserung der Haltbarkeit und Eigenschaften des zweiten Fluids erreicht werden kann.

Weiters kann vorgesehen sein, dass zumindest bereichsweise um den Wärmetauscher 2 ein Magnetfeld angeordnet wird. Durch ein derartiges Magnetfeld kann eine Wasserenthärtung erreicht werden, wodurch eine Verkalkung der nachfolgend durchströmten Rohre weitgehend vermieden werden kann. Dabei kann vorgesehen sein, dass um die Rohre des Wärmetauschers 2 eine elektrische Leitung spiralförmig gewickelt ist und diese elektrische Leitung an eine Energiequelle angeschlossen ist. Insbesondere kann vorgesehen sein, dass der Strom für die Umwälzpumpe 61, die Durchsatzpumpe 64, die Hygienisierungspumpe 47 und/oder den Warmwassererzeuger 52 durch die um den Wärmetauscher 2 spiralförmig gewickelte elektrische Leitung geleitet wird.

Als besonders günstig erscheint es, wenn der Wärmetauscher 2 sowohl zur Aktivierung des zweiten Fluids als auch zur Enthärtung des zweiten Fluids ausgebildet ist. Dabei kann bei einem spiralförmigen Wärmetauscher eine zusätzliche spiralförmig angeordnete elektrische Leitung vorgesehen sein, wobei diese Kombination eine Doppelspirale ergibt. Wird die elektrische Leitung mit dem Warmwassererzeuger 52 verbunden, und ist der Warmwassererzeuger 52 als Durchlauferhitzer ausgebildet, fließt Strom genau dann durch die elektrische Leitung wenn auch zweites Fluid durch den Wärmetauscher 2 fließt.

Es kann vorgesehen sein, dass zwei oder mehr Wärmetauscher 2 parallel geschaltet sind. Dabei kann das häusliche Grauwasser und das Frischwasser auf die Wärmetauscher 2 aufgeteilt werden. Mit einer derartigen Anordnung kann mit vorgegebenen Elementen einfach eine Anpassung an unterschiedliche Durchflussmengen erfolgen. Weiters kann im Betrieb ein hoher Wirkungsgrad für einen großen Bereich an Durchflussmengen erzielt werden, wobei die Anzahl der durchflossenen Wärmetauscher 2 der Menge der benötigten Durchflussmenge angepasst wird. Jeder Wärmetauscher 2 kann dabei wie oben beschrieben ausgebildet sein.

Weiters kann durch eine Ventil- und Pumpensteuerung sichergestellt werden, welche Wärmetauscher 2 in Betrieb sind. Beispielsweise kann das häusliche Grauwasser in einem Staubehälter gesammelt werden und die Anzahl der benötigten Wärmetauscher 2 durch den Füllstand des Staubehälters und/oder über die Änderung des Füllstandes ermittelt werden.

Sind die Wärmetauscher 2 als Spirale ausgebildet, so können mehrere Wärmetauscher 2 übereinandergestapelt angeordnet werden und der Staubehälter in der Mitte der Spiralen angeordnet sein. Der Staubehälter kann weiters einen Überlauf aufweisen, der mit der Abwasserleitung 32 verbunden ist, wodurch das System auch bei angefülltem Staubehälter weiter häusliches Grauwasser aufnehmen kann. Bei jedem Wärmetauscher 2 kann ein Abzweiger, eine Durchsatzpumpe 64 und ein Niveaufühler vorgesehen sein. Sobald das häusliche Grauwasser den Niveaufühler/Sensor erreicht, schaltet sich die jeweilige Durchsatzpumpe 64 ein. Daher läuft nur eine Durchsatzpumpe 64, wenn wenig häusliches Grauwasser kommt und bei steigendem häuslichen Grauwasseranfall, der einen steigenden Pegel im Staubehälter bewirkt, schalten sich die Durchsatzpumpen 64 nacheinander ein, wodurch die Durchsatzmenge steigt. Gegebenenfalls kann zusätzlich häusliches Grauwasser über den Überlauf unmittelbar in die Abwasserleitung 32 gelangen. Gleichzeitig mit jeder Durchsatzpumpe 64 kann ein Frischwasserventil eingeschaltet werden, das Frischwasser durch den jeweils laufenden Wärmetauscher 2 strömen lässt. Jeder Wärmetauscher 2 kann mit einer eigenen Reinigungs- und Hygienisierungsvorrichtung ausgestattet sein, wie sie oben beschrieben sind.

Mit einer derartigen modularen Einrichtung kann ein hoher Wirkungsgrad über eine große Bandbreite an Durchflussmengen sichergestellt werden.

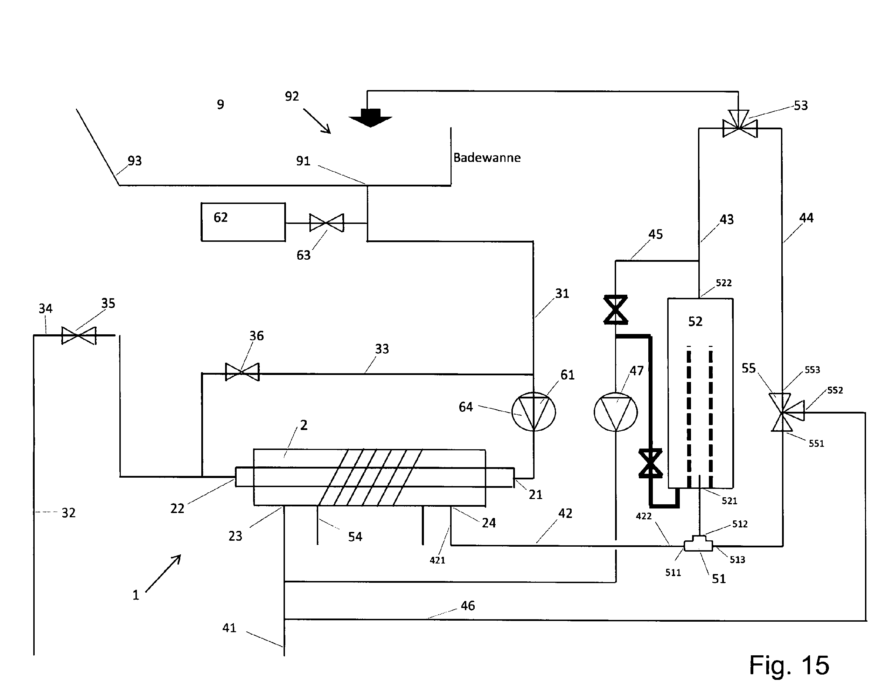

In Fig. 15 ist Ausführungsform der Erfindung mit einer Badewanne als Verbraucher 9 dargestellt. Dabei wird das Wasser nach Gebrauch über die Grauwasserleitung 31 durch den Wärmetauscher 2 geführt. Gleichzeitig wird Wasser aus dem Warmwassererzeuger 52 entnommen, durch den Wärmetauscher 2 geführt und mittels des Grauwassers erwärmt.

Dabei kann der Warmwassererzeuger 52 als Boiler mit einem hinreichenden Speichervolumen ausgebildet sein und ein Schichtladerohr umfassen. Durch das Schichtladerohr wird das in den Warmwassererzeuger 52 einströmende Wasser je nach Temperatur über das perforierte, innen stehende Schichtladerohr in jene Höhe transportiert, in der im Warmwassererzeuger 52 außerhalb des Schichtladerohres Wasser mit gleicher Temperatur ist.

Wird die Badewanne gefüllt, wird Wasser aus dem oberen Bereich des Speichers des Warmwassererzeugers 52 entnommen und unten strömt kaltes Wasser nach. Dabei fällt noch kein Grauwasser an und eine Vorwärmung des in den Warmwassererzeuger 52 einströmenden Wassers erfolgt üblicherweise nicht.

Eine Regelung sorgt dafür, dass das Heizsystem im Warmwassererzeuger 52 nicht unmittelbar anspringt und das einströmende Wasser im unteren Bereich als Kaltwasser stehen bleibt. Wird das Badewasser aus der Badewanne abgelassen, so wird Wasser aus dem unteren Bereich des Warmwassererzeugers 52 durch den Wärmetauscher 2 gepumpt, wodurch eine Erwärmung durch das aus der Badewanne abgelassene Grauwasser erfolgt. Das erwärmte Wasser wird wieder dem Warmwassererzeuger 52 zugeführt, wobei es aufgrund seiner höheren Temperatur von dem Schichtladerohr in einen höheren Bereich transportiert wird.

Mittels einer Regelung kann sichergestellt werden, dass Wasser nur so lange vom Warmwassererzeuger 52 entnommen und durch den Wärmetauscher 2 geführt wird, solange durch das Grauwasser eine Vorwärmung erfolgt.

Nach der Vorwärmung durch das Grauwasser kann das Wasser im Warmwassererzeuger 52 mittels eines Heizsystems des Warmwassererzeugers 52 auf eine vorgebbare Temperatur erwärmt werden.

Für die erforderliche zusätzliche Aufheizung des Wassers kann eine Solaranlage vorgesehen sein, wodurch die Ausnutzung vor Ort verfügbaren Energie verbessert wird.

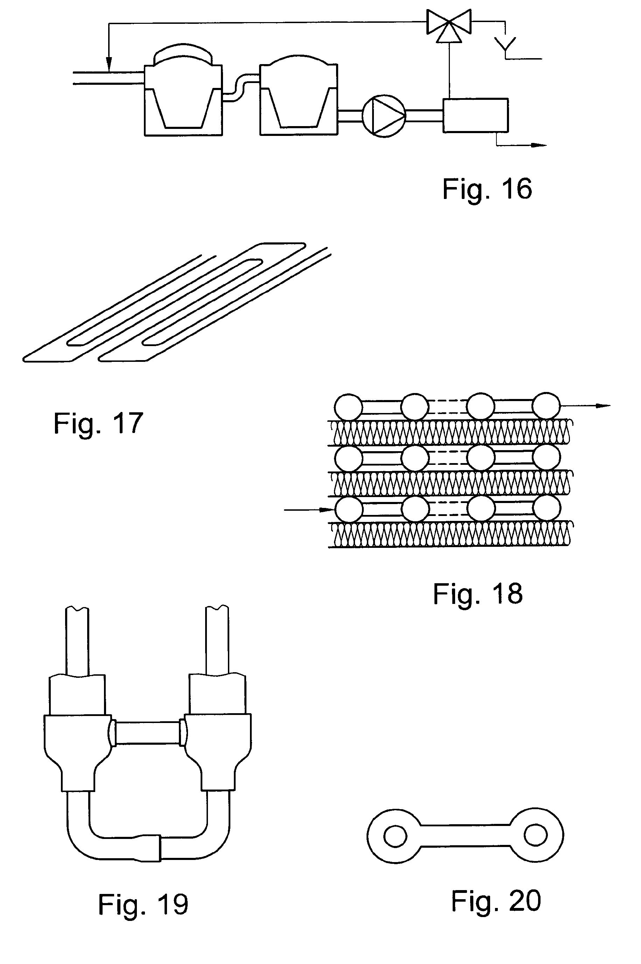

Gemäß Fig. 16 kann dem Wärmetauscher 2 in der Grauwasserleitung die Umwälzpumpe 61 und/oder die Durchsatzpumpe 64 vorgeschaltet sein. Als vorteilhaft hat sich gezeigt, wenn der Umwälzpumpe 61 und/oder der Durchsatzpumpe 64 ein Grobfilter 65 vorgeschaltet ist, wodurch grobe Verschmutzungen einfach herausgefiltert werden können.

Eine weitere Erhöhung der Zuverlässigkeit des Systems kann erreicht werden, wenn zwischen dem Grobfilter 65 und der Umwälzpumpe 61 und/oder der Durchsatzpumpe 64 zusätzlich ein Feinfilter 66 angeordnet ist.

Der Grobfilter 65 und der Feinfilter 66 können jeweils in einem Gehäuse mit abnehmbaren Verschluss angeordnet sein. Vorzugsweise sind die Filter herausnehmbar in dem Gehäuse angeordnet und können als Metallsieb, Stofffilter, Papierfilter oder einem anderen geeigneten Material sein. Sofern im Bereich des Grobfilters 65 und des Feinfilters 66 Überdrücke nicht auftreten, können sie auch in offener Bauweise bereitgestellt werden. Beispielsweise kann der Grobfilter 65 und/oder der Feinfilter 66 unmittelbar im Bereich des Abflusses des Verbrauchers 9 angeordnet sein.

Eine periodische Wartung und Reinigung kann durch Herausnahme und Reinigung und/oder Erneuerung der Filter 65, 66 erfolgen. Bei dem Einsetzen der Filter 65, 66 kann auf einfache Weise ein Reinigungsmittel in wenigstens einen der Filter gegeben werden. Wird im Reinigungsschritt dieser Filter 65, 66 durchströmt, so kann sichergestellt werden, dass das Reinigungsmittel im Reinigungsschritt umgewälzt wird.

Große Wärmetauscher 2 können modular zusammengebaut werden. In Fig. 19 ist eine Draufsicht auf eine Umlenkung 25 gezeigt. Mit der Umlenkung 25 können zwei Doppelrohre 250 miteinander verbunden werden, wobei jeweils zwei innenliegende Grauwasserrohre 251 und zwei Frischwasserrohre 252 miteinander verbunden werden, die Grauwasserrohre 251 über eine U-Leitung 253 und die Frischwasserrohr über eine Stichleitung 254. In Fig. 20 ist ein Schnitt entlang der Längsachse der Stichleitung 254 gezeigt.

Der Wärmetauscher 2 kann aus nebeneinanderliegenden, durch die Umlenkungen 25 verbundenen Doppelrohren 250 aufgebaut sein, wie dies in Fig. 17 dargestellt ist. Dabei können die Doppelrohre 250 im Wesentlichen in einer Ebene angeordnet sein.

Es kann auch vorgesehen sein, dass mehrere Ebenen von Doppelrohren 250 übereinander angeordnet werden, wie dies in Fig. 18 gezeigt ist. Zwischen den Doppelrohren 250 kann auf einfache Weise ein Isolierkörper, beispielsweise eine Platte aus einem Isolierstoff, angeordnet werden.

Auf diese Weise kann ein einfacher und kostengünstiger Wärmetauscher 2 ausgebildet werden. Der Wärmetauscher 2 kann dabei im Wesentlichen quaderförmig ausgebildet werden, wodurch auch eine Außendämmung mit Platten aus einem Isolierstoff einfach ausgeführt werden kann.

Es hat sich als vorteilhaft gezeigt, wenn das Grauwasser im Wärmetauscher im Wesentlichen von unten nach oben strömt, wodurch allfällige Lufteinschlüsse leichter aus dem Wärmetauscher 2 befördert werden. Lufteinschlüsse wirken sich nachteilig auf den Wärmeübergang aus, weshalb eine Strömung von unten nach oben den Wirkungsgrad des Wärmetauschers 2 verbessert.

Bei Ausführungen für ein Badezimmer kann vorgesehen sein, dass das gesamte System in einem Gehäuse angeordnet ist, welches frei im Bad aufstellbar ist. Insbesondere kann auch vorgesehen sein, dass zumindest der Wärmetauscher 2 und allfällige Pumpen hinter der Verkleidung der Badewanne angeordnet werden. In diesem Bereich ist üblicherweise hinreichen Freiraum gegeben. Zur Servicierbarkeit kann vorgesehen sein, dass die gesamte oder ein Teil der Vorderfront der Badewannenverkleidung abnehmbar und/oder aufklappbar ist.

Insbesondere bei einem nachträglichen Einbau wird der Wärmetauscher 2 höher als der Ablauf einer Badewanne und/oder einer Dusche 92 angeordnet sein. Dabei kann vorgesehen sein, dass im Bereich des Abflusses der Badewanne und/oder der Dusche die Vertiefung ausgebildet ist und dass eine Pumpe zum Abpumpen des Grauwassers aus der Vertiefung vorgesehen ist.

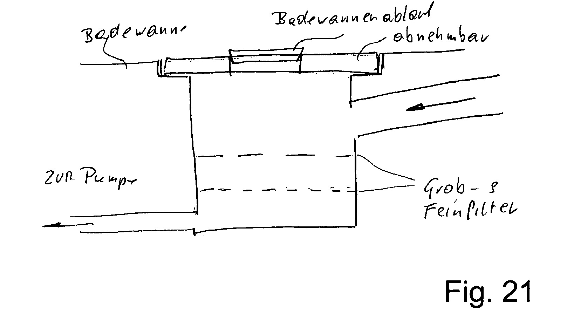

Bei einer Badewanne kann vorgesehen sein, dass die Vertiefung einen doppelten Deckel aufweist, wobei ein großer Deckel den Zugang zu den in der Vertiefung angeordneten Filtern ermöglicht und in dem großen Deckel der verschließbare Badewannenablauf angeordnet ist. Dabei kann der große Deckel verschraubt und/oder mit einem Bajonettverschluss ausgestattet sein. Eine Ausführungsform einer derartigen Vertiefung ist in Fig. 21 gezeigt.

Wird das Grauwasser aus der Vertiefung abgesaugt, so erscheinen volumetrisch fördernde Pumpen vorteilhaft, da mit diesen gegebenenfalls auch Luft angesaugt und die Pumpe auf einfache Weise höher als die Vertiefung angeordnet werden kann.

Eine weitere vorteilhafte Ausführung der Erfindung betrifft eine Vorwandinstallation, welche üblicherweise unmittelbar auf den Rohfußboden aufgesetzt werden.

Dadurch wird eine tiefe Einbauanlage ermöglicht, sodass das Grauwasser bis zum Eingang in den Wärmetauscher 2 gegebenenfalls nur geringfügig angehoben werden muss und der Energiebedarf besonders gering gehalten werden kann.

Weiters kann die Duschtasse mit einer niederen Bauhöhe versehen werden, wodurch im Wesentlichen bodenebene Duschtassen möglich sind, wodurch behindertengerechte Installationen erreicht werden können. Die Vorwandinstallation kann eine Sitzfläche umfassen, wodurch die Möglichkeit eines Duschens im Sitzen ermöglicht werden kann.

Die Vorwandinstallation kann eine Öffnungsklappe aufweisen, wodurch eine Servicierung einfach erfolgen kann.

Durch die Verwendung von volumetrisch fördernden, selbstansaugenden Pumpen kann eine besonders platzsparende Bauform erreicht werden, wobei hier auch eine erhöhte Bauform für den nachträglichen Einbau bereitgestellt werden kann.

Bei der Einrichtung 1 zur Warmwasserbereitung kann das Abwasser gepumpt werden und es kann ein in sich autarkes System darstellen. Es kann daher auch ohne nahe gelegenen Abwasseranschluss fast überall aufgestellt werden, wobei das Abwasser auch über weitere Strecken abgeleitet werden kann. Daher eignet sich das System insbesondere auch für mobile Anlagen, welche bei Zeltfesten, Sportveranstaltungen oder dergleichen bereitgestellt werden können. Diese Ausführungen können beispielsweise an einen Gartenschlauchanschluss angeschlossen werden, das Abwasser in den nächsten Straßenkanal abgeleitet werden und die Stromversorgung über die nächstgelegene Steckdose sichergestellt werden.

Daher kann die Einrichtung 1 einfach als "Stand alone" Einheit ausgebildet werden, wobei eine ganze Duschkabine mit dem System in der Duschtasse geliefert und frei im Badezimmer aufgestellt werden kann. Es braucht dann nur wie eine Waschmaschine an Kaltwasser, Abwasser und Strom angeschlossen werden. Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Einrichtung (1) zur Warmwasserbereitung für Haushalte od. dgl. mit einem Wärmetauscher (2), wobei der Wärmetauscher (2) einen ersten Eingang (21) für ein erstes Fluid, einen ersten Ausgang (22) für das erste Fluid und einen zweiten Eingang (23) für ein zweites Fluid und einen zweiten Ausgang (24) für das zweite Fluid aufweist, **dadurch gekennzeichnet, dass** der erste Eingang (21) mit einer Grauwasserleitung (31), der erste Ausgang (22) mit einer Abwasserleitung (32) und der zweite Eingang (23) mit einer Frischwasserleitung (41) verbunden sind.

2. Einrichtung nach Anspruch 1, **dadurch gekennzeichnet, dass** die Grauwasserleitung (31) und die Abwasserleitung (32) weiters mittels einer Reinigungsleitung (33) verbunden sind, und dass ein Fluid mittels einer Umwälzpumpe (61) durch die Reinigungsleitung (33) und der Leitung des Wärmetauschers (2) für das erste Fluid im Kreis führbar ist.

3. Einrichtung nach Anspruch 1 oder 2, **dadurch gekennzeichnet, dass** der zweite Ausgang (24) mit einem ersten Ende (421) einer Verbindungsleitung (42) verbunden ist, und dass das zweite Ende (422) der Verbindungsleitung (42) mit dem Eingang (511) einer Verzweigungseinheit (51) verbunden ist, wobei ein erster Ausgang (512) der Verzweigungseinheit (51) mit dem Eingang (521) eines Warmwassererzeugers (52) verbunden ist, wobei ein Ausgang (522) des Warmwassererzeuger (52) mit einer Heißwasserleitung (43) verbunden ist, und ein zweiter Ausgang (513) der Verzweigungseinheit (51) mit einer Kaltwasserleitung (44) verbunden ist.

4. Einrichtung nach einem der Ansprüche 1 bis 3, **dadurch gekennzeichnet, dass** die Heißwasserleitung (43) und die Frischwasserleitung (41) weiters mittels einer Hygienisierungsleitung (45) verbunden sind, und dass Fluid von der Heißwasserleitung (43) über die Hygienisierungsleitung (45) durch die Leitung des Wärmetauschers (2) für das zweite Fluid führbar ist.

5. Einrichtung nach einem der Ansprüche 1 bis 4, **dadurch gekennzeichnet, dass** eine Aufheizvorrichtung (54) zum Beheizen des Wärmetauschers (2) vorgesehen ist.

6. Einrichtung nach einem der Ansprüche 1 bis 5, **dadurch gekennzeichnet, dass** der Wärmetauscher (2) im Bereich des ersten Eingangs (21) ein Wärmeisolierungsmittel aufweist und dass die Frischwasserleitung (41) und/oder der Wärmetauscher (2) im Bereich des zweiten Eingangs (23) frei von dem Wärmeisolierungsmittel ausgebildet ist.

7. Einrichtung nach einem der Ansprüche 1 bis 6, **dadurch gekennzeichnet, dass** der Wärmetauscher (2) in Bezug auf die Grauwasserleitung (31) und die Abwasserleitung (32) in eingestauter Bauweise angeordnet ist.

8. Einrichtung nach einem der Ansprüche 1 bis 7, **dadurch gekennzeichnet, dass** in der Kaltwasserleitung (44) eine Temperaturbegrenzungsvorrichtung (55) angeordnet ist, und dass eine Frischwasser-Bypassleitung (46) die Frischwasserleitung (41) unmittelbar mit einem zweiten Eingang (552) der Temperaturbegrenzungsvorrichtung (55) verbindet.

9. Dusche (92) mit einer Duschtasse (93), **dadurch gekennzeichnet, dass** im Sockel der Duschtasse (93) eine Einrichtung (1) zur Warmwasserbereitung nach einem der Ansprüche 1 bis 8 angeordnet ist.

10. Verfahren zur Warmwasserbereitung für Haushalte od. dgl. mit einem Wärmetauscher (2), wobei der Wärmetauscher (2) einen ersten Eingang (21) für ein erstes Fluid, einen ersten Ausgang (22) für das erste Fluid und einen zweiten Eingang (23) für ein zweites Fluid und einen zweiten Ausgang (24) für das zweite Fluid aufweist, **dadurch gekennzeichnet, dass** über eine Grauwasserleitung (31) häusliches Grauwasser in den ersten Eingang (21) geleitet wird, und dass Frischwasser über eine Frischwasserleitung (41) in den zweiten Eingang (23) geleitet wird.

11. Verfahren nach Anspruch 10, **dadurch gekennzeichnet, dass** in einem Reinigungsschritt ein Umwälzkreislauf durch die Leitung des Wärmetauschers (2) für das erste Fluid und eine die Grauwasserleitung (31) und die Abwasserleitung (32) verbindende Reinigungsleitung (33) gebildet wird, und ein Fluid mittels einer Umwälzpumpe (61) im Umwälzkreislauf im Kreis geführt wird.

12. Verfahren nach Anspruch 10 oder 11, **dadurch gekennzeichnet, dass** das aus dem zweiten Ausgang (24) austretende Fluid in einer Verzweigungseinheit (51) in zwei Teilströme geteilt wird, und dass der erste Teilstrom mit einem Warmwassererzeuger (52) auf eine vorgebbare Heißtemperatur gebracht wird und anschließend in eine Heißwasserleitung (43) eingespeist wird, und dass der zweite Teilstrom in eine Kaltwasserleitung (44) eingespeist wird.

13. Verfahren nach einem der Ansprüche 10 bis 12, **dadurch gekennzeichnet, dass** in einem Hygienisierungsschritt der Wärmetauscher (2) mittels einer Aufheizvorrichtung (54) beheizt wird.

14. Verfahren nach einem der Ansprüche 10 bis 13, **dadurch gekennzeichnet, dass** in einem Hygienisierungsschritt von der Heißwasserleitung (43) Fluid über eine Hygienisierungsleitung (45) zur Frischwasserleitung (41) und durch die Leitung des Wärmetauschers (2) für das zweite Fluid geführt wird.

15. Verfahren nach einem der Ansprüche 10 bis 14, **dadurch gekennzeichnet, dass** der Reinigungsschritt und der Hygienisierungsschritt zumindest teilweise gleichzeitig durchgeführt werden.
